# EUROPÄISCHE PATENTSCHRIFT

(11) **EP 2 666 197 B1**
(45) Veröffentlichungstag und Bekanntmachung des Hinweises auf die Patenterteilung: **18.03.2015**
(21) Anmeldenummer: 12702412.3
(22) Anmeldetag: 18.01.2012
(51) Int. Cl.: H01M 2/10, H01M 8/24

(54) **BATTERIE MIT EINER MEHRZAHL VON BATTERIEZELLEN**
BATTERY WITH A PLURALITY OF BATTERIE CELLS
BATTERIE AVEC PLUSIEURS DE CELLULES DE BATTERIES

(30) Priorität: 21.01.2011 DE 102011009102
(43) Veröffentlichungstag der Anmeldung: 27.11.2013
(73) Patentinhaber: Audi AG, 85045 Ingolstadt (DE)
(72) Erfinder: Kreutzer, Christoph, 85057 Ingolstadt (DE); VASSEN, Heinz-Willi, 85114 Buxheim (DE); SCHWARZBAUER, Robert, 86570 Inchenhofen (DE); FEES, Heiner, 74321 Bietigheim-Bissingen (DE)
(74) Vertreter: Herbst, Matthias Heinz
(86) Internationale Anmeldenummer: PCT/EP2012/000212
(87) Internationale Veröffentlichungsnummer: WO 2012/097980

(56) Entgegenhaltungen:
- WO-A2-2004/006359
- JP-A- 11 067 176
- US-A1- 2006 093 890
- US-A1- 2009 239 137
- US-B1- 6 190 793

## Beschreibung

Die Erfindung betrifft eine Batterie mit einer Mehrzahl von Batteriezellen, welche einen an einer Bodenplatte der Batterie anliegenden Zellstapel bilden. Zum Verspannen der Batteriezellen gegeneinander weist die Batterie wenigstens einen Keil auf. Mittels des wenigstens einen Keils sind die Batteriezellen des Zellstapels derart gegeneinander verspannt, dass auf sich miteinander in Anlage befindende Seiten der Batteriezellen eine Kraft wirt, welche den Zellstapel zusammenhält.

Lithium-Ionen-Batterien, welche als Energiespeicher in einem Kraftfahrzeug eingesetzt werden können, umfassen eine Mehrzahl von üblicherweise die Form eines flachen Quaders aufweisenden Batteriezelle, welche mit einer definierten Kraft verspannt werden. Dies dient der Sicherheit beim Betrieb der Batterie und ist im Hinblick auf die Lebensdauer der Batterie von Bedeutung. Auf den Zellstapel wird hierbei eine Kraft aufgebracht und so einer mechanischen Deformation entgegengewirkt, welche sich durch den in den Batteriezellen herrschenden Innendruck ergibt.

Aufgrund von Fertigungstoleranzen und aufgrund eines in Abhängigkeit vom Ladezustand, der Umgebungstemperatur und der Alterung schwankenden Innendrucks der Batteriezellen kann es zu Änderungen der Dicke des Zellstapels kommen. Der Zellstapel agiert also im Betrieb prinzipiell wie eine Feder. Das Verspannen der Batteriezellen gegeneinander dient dem Kommensieren solcher Änderungen der Dicke des Zellstapels und sorgt dafür, dass diese in - beispielsweise vom Hersteller spezifizierten - mechanischen Grenzen gehalten werden.

Insbesondere bei Verwendung einer größeren Anzahl von Batteriezellen in der Batterie können sich die Fertigungstoleranzen der im Zellstapel nebeneinander angeordneten Batteriezellen und der Verspannungselemente zu einer beträchtlichen Größe aufsummieren, wodurch sich die Einhaltung einer geforderten Vorspannkraft als schwierig gestaltet. Auch das Verringern von Fertigungstoleranzen der Komponenten der Batterie ist vergleichsweise aufwändig.

Die WO 2004/006 359 A2 beschreibt eine Kraftfahrzeugbatterie mit einem Gehäuse, in welchem sich eine Mehrzahl von Batteriezellen befinden. Das Gehäuse steht auf einer Trägerplatte. Mit der Trägerplatte ist ein Befestigungsbügel fest verbunden, von welchem sich ein vertikaler Schenkel parallel und im Abstand zu einer Seitenwand des Gehäuses erstreckt. In einen Zwischenraum zwischen dem vertikalen Schenkel und der Seitenwand des Gehäuses wird ein Befestigungsteil eingebracht, welches in einem Gelenk abgeknickt und so zwischen der Seitenwand des Gehäuses und einer Innenfläche des Schenkels verklemmt wird. So ergibt sich eine dauerhafte Klemmwirkung, die das Gehäuse sicher auf der Trägerplatte hält.

Die US 2006/0 093 890 A1 beschreibt einen Brennstoffzellenstapel mit einer Mehrzahl von Brennstoffzellen und Endplatten an gegenüberliegenden Enden des Stapels. Um die Brennstoffzellen gegeneinander zu verspannen, sind zwei Spannbänder vorgesehen. Seitliche Vorsprünge an den Endplatten sorgen dafür, dass die Spannbänder nicht an den äußeren Kanten der Brennstoffzellen anliegen. Anstelle von an den Endplatten angeordneten Vorsprüngen können auch beispielsweise keilförmige Einlegeteile vorgesehen sein.

Die US 6 190 793 B1 betrifft ebenfalls einen Brennstoffzellenstapel mit Endplatten, zwischen welchen eine Mehrzahl von Brennstoffzellen angeordnet sind. Eine Zugstrebe ist durch die Endplatten und die Brennstoffzellen hindurchgeführt. Mittels einer Federplatte und Federarmen übt die Zugstrebe eine die Brennstoffzellen gegeneinander verspannende Kraft aus. Zwischen ein Spannfutter und die Zugstrebe können Keile eingefügt sein, wobei das Spannfutter in einer die Zugstrebe aufnehmenden Öffnung in der Federplatte angeordnet ist

Die US 2009/0239137 A1 beschreibt eine Lithium-Ionen-Batterie mit einem eine Mehrzahl von Batteriezellen umfassenden Zellstapel, welcher in einem Gehäuse der Batterie aufgenommen ist. Eine erste Seitenwand des Gehäuses grenzt flächig an eine Seite des Zellstapels an. Eine gegenüberliegende Seitenwand des Gehäuses läuft von einer Bodenplatte des Gehäuses nach oben hin keilförmig zu. In den spitz zulaufenden Zwischenraum zwischen dem Zellstapel und dieser Seitenwand wird von oben ein Keil eingeschoben, sodass die Batteriezellen des Zellstapels gegeneinander verspannt werden. Der eingeschobene Keil wird mittels einer durch die keilförmige Seitenwand hindurchgeführten Schraube fixiert.

Bei der US 7 241 530 B2, welche ebenfalls eine Lithium-Ionen-Batterie betrifft, werden in einem den Zellstapel aufnehmenden Batteriegehäuse zwei gegenläufig geformte Keile angeordnet, von denen einer an einer Seite des Zellstapels anliegt und der andere an einer Rippe, welche an eine Seitenwand des Gehäuses angeformt ist.

Des Weiteren beschreibt die WO 2005/045981 A1 ein Verfahren zum Verspannen von Brennstoffzellen eines Brennstöffzellenstapels mittels Zugschrauben, welche durch eine obere Endplatte hindurchgeführt und mit einer gegenüberliegenden unteren Endplatte verschraubt sind. Zwischen der oberen Endplatte und den gestapelten Brennstoffzellen, befindet sich eine Druckplatte mit konisch auslaufenden Randbereichen. Durch Anziehen von Stellschrauben, welche durch seitliche Schenkel der oberen Endplatte hindurchgeführt sind, können zwei Keile von außen zwischen die konischen Randbereiche und die Endplatte eingeschoben werden und so die Kraft Verspannen des Brennstoffzellenstapels erhöhen.

Die aus dem Stand der Technik bekannten Konstruktionen zum Verspannen des Zellstäpels einer Batterie erweisen sich als vergleichsweise aufwändig, wenn es darum geht, eine Fixierung der Komponenten der Batterie zu erreichen.

Aufgabe der vorliegenden Erfindung ist es daher, eine Batterie der eingangs genannten Art zu schaffen, welche auf besonders einfache Art und Weise ein Fixieren von Komponenten der Batterie ermöglicht.

Diese Aufgabe wird durch eine Batterie mit den Merkmalen des Patentanspruchs 1 gelöst. Vorteilhafte Ausgestaltungen mit zweckmäßigen Weiterbildungen der Erfindung sind in den abhängigen Patentansprüchen angebeben.

Die erfindungsgemäße Batterie weist wenigstens einen an der Bodenplatte festgelegten Bügel auf, welcher den wenigstens einen Keil und den Zellstapel in deren Lage relativ zu der Bodenplatte fixiert. Durch Einführen des Keils kann das Verspannen der Batteriezellen des Zellstapels gegeneinander mit einer gewünschten Kraft erreicht werden. Durch Festlegen des Bügels an der Bodenplatte kann dann der Keil in seiner die gewünschte Verspannung bewirkenden Lage fixiert werden: Zugleich ist durch das Festlegen des wenigstens eines Bügels an der Bodenplatte der Zellstapel an der Bodenplatte lagesicher gehalten. Durch das einfache Verspannen der Batteriezellen gegeneinander mittels des wenigstens einen Keils lassen sich Fertigungstoleranzen, etwa der Batteriezellen und/oder des Bügels, besonders leicht kompensieren. Zudem können mittels des Bügels mehrere Komponenten der Batterie, nämlich der Keil und der Zellstapel, besonders einfach und sicher fixiert werden. Hierfür ist lediglich, der Arbeitsschritt notwendig, welcher für das Sichern der Lage des Keils sorgt. Zudem ist so eine Batterie mit einem besonders einfachen Aufbau realisierbar.

Eine besonders gute Lagesicherung des Zellstapels ist erreichbar, wenn gemäß der Erfindung der wenigstens eine Bügel U-förmig ausgebildet ist und den Zellstapel überspannt.

Als weiter vorteilhaft hat es sich gezeigt, wenn der wenigstens eine Keil an einem Schenkel des wenigstens einen Bügels geführt ist. Dadurch ist das Niederdrücken des Keils zum Zwecke des Einstellens einer auf den Zellstapel wirkenden Verspannkraft besonders einfach zu bewerkstelligen. Zudem ist so eine Vorfixierung des wenigstens einen Keils gegeben, welche die Handhabung von Bügel und Keil bei der Montage der Batterie erleichtert.

Bevorzugt befindet sich wenigstens ein erster Keil an einer ersten Seite des Zellstapels und wenigstens ein zweiter Keil an einer zweiten Seite des Zellstapels. Dies erlaubt eine besonders gute Kompensation von Fertigungstoleranzen und ein besonders genaues Einstellen der vorzusehenden Verspannkraft.

Als weiter vorteilhaft hat es sich gezeigt, wenn der Zellstapel an wenigstens einer Seitenplatte der Batterie anliegt, welche zumindest bereichsweise eine dem wenigstens einen Keil gegenläufige Keilform aufweist. Dadurch lässt sich eine flächige und für die Druckbeaufschlagung des Zellstapels vorteilhafte Anlage des Keils an der Seitenplatte erreichen. Durch die schrägen, gegenläufigen Flächen von Keil und Seitenplatte können besonders gut die Fertigungstoleranzen der Batteriezellen des Zellstapels, der Seitenplatte und des Bügels kompensiert werden.

Als weiter vorteilhaft hat es sich gezeigt, wenn wenigstens eine Schraubenmutter oder eine Schraube zum Festlegen des wenigstens einen Bügels an der Bodenplatte vorgesehen ist. Dadurch lässt sich nämlich zusätzlich zum Fixieren des Keils in seiner das Verspannen der Batteriezellen sicherstellenden Lage ein Verspannen des Zellstapels an der Bodenplatte erreichen.

Bevorzugt ist es weiterhin, wenn der wenigstens eine Bügel aus einem Federstahl gebildet ist. Dadurch kann der Bügel eine Beaufschlagung mit einer Kraft, wie sie durch den als Feder agierenden Zellstapel bewirkt wird, besonders gut kompensieren.

Schließlich hat es sich als vorteilhaft gezeigt, wenn der wenigstens eine Bügel eine Beaufschlagung mit einer Kraft von 1kN bis 5kN elastisch kompensiert. Im Betrieb einer Lithium-Ionen-Batterie treten nämlich typischerweise Kraftbeaufschlagungen von Vorspannmitteln im Bereich von 1kN bis 4kN auf. Die Federkraft des als Feder wirkenden Zellstapels kann um ± 35% bis ±40% von einem Normalwert abweichen. Auch im Hinblick auf dieses Verhalten des Zellstapels ist die elastische Reaktion des wenigstens einen Bügels vorteilhaft.

Bei einer Fehlfunktion von Batteriezellen einer Lithium-Ionen-Batterie können sehr hohe Innendrücke auftreten. Dann wirken auf den wenigstens einen Bügel Kräfte, welche ein Mehrfaches der im Normalbetrieb auftretenden Kräfte betragen können, also ein Mehrfaches der oben genannten 1kN bis 4kN. Entsprechend ist es ergänzend oder alternativ vorteilhaft, wenn der wenigstens eine Bügel einer Beaufschlagung mit einer Kraft zerstörungsfrei widersteht, welche ein Mehrfaches, insbesondere das 10-fache bis 15-fache, einer elastisch kompensierbaren Kraft beträgt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: in einer Schnittansicht eine Lithium-Ionen-Batterie mit einem Bügel, welcher einen Zellstapel überspannt, wobei Batteriezellen des Zellstapels durch Keile verspannt sind; und
- Fig. 2: ausschnittsweise die Lithium-Ionen-Batterie gemäß Fig. 1 in einer Perspektivansicht.

Eine Lithium-Ionen-Batterie 10 umfasst eine Mehrzahl von Batteriezellen 12, welche einen Zellstapel 14 bildern. Auf dem Zellstapel 14 sitzt ein Kopfteil 16 auf. Die Batteriezellen 12, von denen vorliegend beispielhaft vier Stück gezeigt sind, weisen die Form flacher Quader auf, deren jeweilige Schmalseiten auf einer Bodenplatte 18 der Batterie 10 aufstehen. In alternativen Ausführungsformen kann der Zellstapel 14 deutlich mehr Batteriezellen 12 aufweisen. Die Batteriezellen 12 des Zellstapels 14 sind mittels Keilen 20, 22 gegeneinander verspannt, wobei auf die sich miteinander in Anlage befindenden Seiten der Batteriezellen 12 eine definierte Kraft wirkt, welche den Zellstapel 14 zusammenhält.

Im Herstellungsprozess der Batterie 10 wird der Zellstapel 14 mittels einer (nicht gezeigten) Spannvorrichtung mit einer definierten Verspannkraft beaufschlagt, welche für einen festen Zusammenhalt der Batteriezellen 12 sorgt. Zwischen einem den Zellstapel 14 überspannenden U-förmigen Bügel 24 und den Zellstapel 14 einfassenden Seitenplatten 26, 28 ist ein Zwischenraum ausgebildet. Um die Verspannkraft aufrechtzuerhalten, werden die beiden Keile 20, 22 in diesem Zwischenraum nach unten gedrückt, woraufhin die (nicht gezeigte) Spannvorrichtung wieder entfernt werden kann.

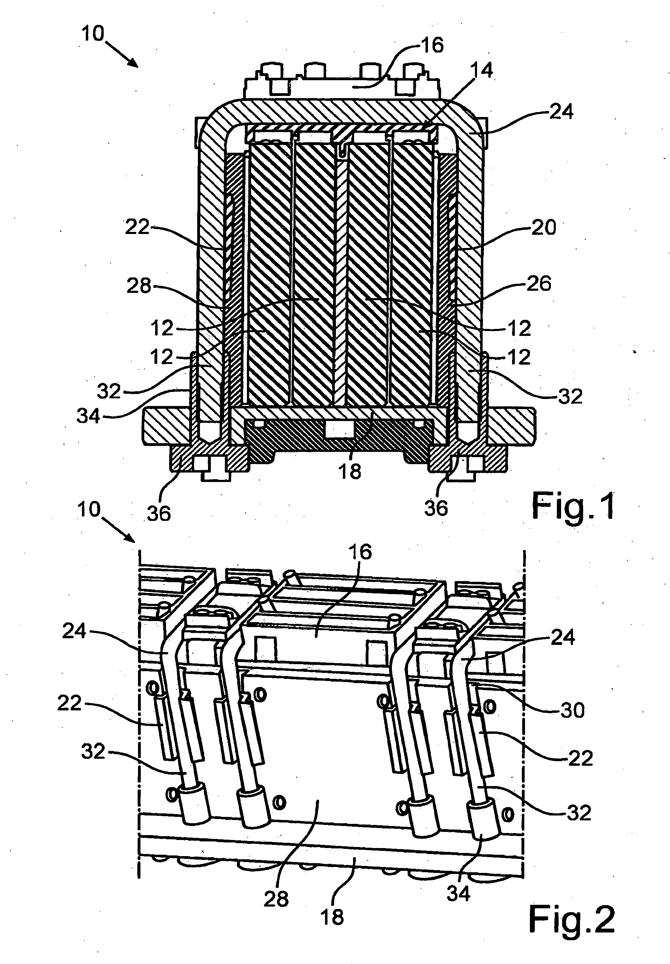

Ein erster Keil 20 befindet sich zwischen dem Bügel 24 und der rechten Seitenplatte 26 und ein zweiter Keil 22 zwischen dem Bügel 24 und der linken Seitenplatte 28. Die Seitenplatten 26, 28 weisen Längsnuten 30 auf (vgl. Fig. 2), in welchen die Keile 20, 22 geführt sind. Im Bereich der Längsnuten 30 weisen die Seitenplatten 26, 28 eine Keilform auf, welche dem des jeweils anliegenden Keils 20, 22 gegenläufig ist.

Die Keile 20, 22 umgreifen von dem Kopfteil 16 zu der Bodenplatte 18 der Batterie 10 hin verlaufende Schenkel 32 des Bügels 24, sodass die Keile 20, 22 sowohl an dem Bügel 24 als auch in den Längsnuten 30 der Seitenplatten 26, 28 geführt sind.

Zum Verspannen des Zellstapels 14 werden die an dem Bügel 24 beidseitig angebrachten Keile 20, 22 in den Längsnuten 30 nach unten geschoben, bis sie spielfrei an den Seitenplatten 26, 28 anliegen. Zugleich können so Fertigungstoleranzen der Batteriezellen 12, der Seitenteile 26, 28 und des Bügels 24 kompensiert werden Durch das Niederdrücken der Keile 20, 22 lässt sich zudem besonders gut die Kraft einstellen, mit welcher die Batteriezellen 12 gegeneinander verspannt werden.

Zum Einstellen der Verspannkraft und um Fertigungstoleranzen besonders gut auszugleichen, sind vorliegend zwei Keile 20, 22 je Bügel 24 vorgesehen. Die Batterie 10 umfasst bevorzugt eine Mehrzahl von derartigen Bügeln 24, von denen in Fig. 2 beispielhaft vier gezeigt sind. Die Bügel 24 sind durch Ausnehmungen in dem Kopfteil 16 hindurchgeführt.

Untere Enden der beiden Schenkel 32 eines jeweiligen Bügels 24 sind in Schäfte 34 von Schraubenmuttern 36 eingeführt, welche ein Innengewinde aufweisen, und welche von unten durch Öffnungen in der Bodenplatte 18 hindurchgeführt sind. Durch Anziehen der Schraubenmuttern 36 werden die Keile 20, 22 in ihrer den Zellstapel 14 mit der Verspannkraft beaufschlagenden Lage fixiert. Zugleich wird über die Bügel 24 der Zellstapel 14 lagegesichert an die Bodenplatte 18 angebunden.

In alternativen Ausführungsformen können die Bügel 24 auch durch die Bodenplatte 18 hindurchgeführt und an der Unterseite der Bodenplatte 18 mit Schraubenmuttern gesichert werden. Die Bügel 24 sind bevorzugt aus einem Federstahl gebildet.

## Patentansprüche

1. Batterie, welche als Energiespeicher ausgebildet ist, mit einer Mehrzahl von Batteriezellen (12), welche einen an einer Bodenplatte (18) der Batterie (10) anliegenden Zellstapel (14) bilden, wobei die Batteriezellen (12) die Form flacher Quader aufweisen, deren jeweilige Schmalseiten auf der Bodenplatte (18) der Batterie (10) aufstehen, und mit wenigstens einem Keil (20, 22) zum Verspannen der Batteriezellen (12) gegeneinander, mittels weichem die Batteriezellen (12) des Zellstapels (14) derart gegeneinander verspannt sind, dass auf sich miteinander in Anlage befindende Seiten der Batteriezellen (12) eine Kraft wirkt, welche den Zellstapel (14) zusammenhält,
**gekennzeichnet durch**
wenigstens einen an der Bodenplatte (98) festgelegten Bügel (24), welcher den wenigstens einen Keil (20, 22) und den Zellstapel (14) in deren Lage relativ zu der Bodenplatte (18) fixiert, wobei der wenigstens eine Bügel (24) U-förmig ausgebildet ist und den Zellstapel (14) überspannt.

2. Batterie nach Anspruch 1,
**dadurch gekennzeichnet, dass**
der wenigstens eine Keil (20, 22) an einem Schenkel (32) des wenigstens einen Bügels (24) geführt ist.

3. Batterie nach Anspruch 1 oder 2,
**gekennzeichnet durch**
wenigstens einen ersten Keil (20) an einer ersten Seite des Zellstapels (14) und wenigstens einen zweiten Keil (22) an einer zweiten Seite des Zellstapels (14).

4. Batterie nach einem der Ansprüche 1 bis 3,
**dadurch gekennzeichnet, dass**
der Zellstapel (14) an wenigstens einer Seitenplatte (26, 28) der Batterie (10) anliegt, welche zumindest bereichsweise eine dem wenigstens einen Keil (20, 22) gegenläufige Keilform aufweist.

5. Batterie nach einem der Ansprüche 1 bis 4,
**gekennzeichnet durch**
wenigstens eine Schraubenmutter (36) oder eine Schraube zum Festlegen des wenigstens einen Bügels (24) an der Bodenplatte (18).

6. Batterie nach einem der Ansprüche 1 bis 5,
**dadurch gekennzeichnet, dass**
der wenigstens eine Bügel (24) aus einem Federstahl gebildet ist.

7. Batterie nach einem der Ansprüche 1 bis 6,
**dadurch gekennzeichnet, dass**
der wenigstens eine Bügel (24)
- eine Beaufschlagung mit einer Kraft von 1 kN bis 5kN elastisch kompensiert und/oder
- einer Beaufschlagung mit einer Kraft zerstörungsfrei widersteht, welche ein Mehrfaches, insbesondere das 10-fache bis 15-fache, einer elastisch kompensierbaren Kraft beträgt.

## Claims

1. Battery formed as an energy store, comprising a plurality of battery cells (12) which form a cell stack (14) which rests on a bottom plate (18) of the battery (10), the battery cells (12) being configured in the shape of a flat block, the narrow sides of which stand on the bottom plate (18) of the battery (10), and at least one wedge (20, 22) for bracing the battery cells (12) with respect to each other, by means of which wedge the battery cells (12) of the cell stack (14) are braced with respect to each other such that a force acts on contacting sides of the battery cells (12) and holds the cell stack (14) together, **characterised by** at least one bracket (24) which is fixed to the bottom plate (18) and secures the at least one wedge (20, 22) and the cell stack (14) in their position in relation to the bottom plate (18), the at least one bracket (24) having a U-shaped configuration and spanning the cell stack (14).

2. Battery according to claim 1, **characterised in that** the at least one wedge (20, 22) is guided on a leg (32) of the at least one bracket (24).

3. Battery according to either claim 1 or claim 2, **characterised by** at least one first wedge (20) on a first side of the cell stack (14) and at least one second wedge (22) on a second side of the cell stack (14).

4. Battery according to any of claims 1 to 3, **characterised in that** the cell stack (14) rests on at least one side plate (26, 28) of the battery (10), which side plate has, at least in some regions, a wedge shape in the opposite direction to the at least one wedge (20, 22).

5. Battery according to any of claims 1 to 4, **characterised by** at least one screw nut (36) or a screw for fixing the at least one bracket (24) on the bottom plate (18).

6. Battery according to any of claims 1 to 5, **characterised in that** the at least one bracket (24) is formed from a spring steel.

7. Battery according to any of claims 1 to 6, **characterised in that** the at least one bracket (24)
- resiliently compensates a force of from 1 kN to 5 kN acting thereon, and/or
- withstands, in a non-destructive manner, a force which acts thereon and is a multiple of, in particular 10 times to 15 times, a resiliently compensatable force.

## Revendications

1. Batterie, qui se présente comme source d'énergie, comportant une pluralité d'éléments de batterie (12), qui forment un empilement d'éléments (14) disposés sur une plaque de base (18) de la batterie (10), dans laquelle les éléments (12) de la batterie présentent la forme de parallélépipèdes plats, dont les petits côtés respectifs se dressent sur la plaque de base (18) de la batterie (10), et au moins une cale (20, 22) pour soutenir les éléments de batterie (12) l'un contre l'autre et au moyen de laquelle les éléments de batterie (12) de l'empilement d'éléments (14) sont soutenus l'un contre l'autre de sorte qu'une force, qui solidarise l'empilement d'éléments (14), agisse sur les côtés des éléments de batterie (12) qui s'appuient l'un sur l'autre,
**caractérisée par** :
au moins un étrier (24) disposé sur la plaque de base (18), qui fixe la au moins une cale (20, 22) et l'empilement d'éléments (14) dans leur position par rapport à la plaque de base (18), dans laquelle le au moins un étrier (24) est conçu en forme de U et recouvre l'empilement d'éléments (14).

2. Batterie selon la revendication 1,
**caractérisée en ce que** :
la au moins une cale (20, 22) est guidée sur une branche (32) du au moins un étrier (24).

3. Batterie selon la revendication 1 ou la revendication 2,
**caractérisée par** :
au moins une première cale (20) sur un premier côté de l'empilement d'éléments (14) et au moins une seconde cale (22) sur un second côté de l'empilement d'éléments (14).

4. Batterie selon l'une quelconque des revendications 1 à 3,
**caractérisée en ce que** :
l'empilement d'éléments (14) s'applique sur au moins une plaque latérale (26, 28) de la batterie (10), qui présente au moins par zones une forme de cale opposée à la au moins une cale (20, 22).

5. Batterie selon l'une quelconque des revendications 1 à 4,
**caractérisée par** :
au moins un écrou (36) ou une vis pour fixer le au moins un étrier (24) sur la plaque de base (18).

6. Batterie selon l'une quelconque des revendications 1 à 5,
**caractérisée en ce que** :
le au moins un étrier (24) est formé d'un acier à ressort.

7. Batterie selon l'une quelconque des revendications 1 à 6,
**caractérisée en ce que** :
le au moins un étrier (24)
- compense une sollicitation avec une force de 1 kN à 5 kN de manière élastique et/ou
- résiste sans destruction à une sollicitation avec une force qui atteint un multiple, en particulier 10 à 15 fois, d'une force compensable en mode élastique.
